# EUROPÄISCHE PATENTANMELDUNG

(11) **EP 0 904 682 A1**
(43) Veröffentlichungstag der Anmeldung: **31.03.1999**
(21) Anmeldenummer: 98116931.1
(22) Anmeldetag: 08.09.1998
(51) Int. Cl.: A01C 17/00

(54) **Schleuderstreuer**

(30) Priorität: 26.09.1997 DE 19742440
(71) Anmelder: Amazonen-Werke H. Dreyer GmbH & Co. KG, D-49205 Hasbergen (DE)
(72) Erfinder:

(57) **Zusammenfassung**

Schleuderstreuer mit zumindest zwei Vorratsbehältern für die getrennte Mitführung von zumindest zwei verschiedenen Düngersorten, wobei jedem Vorratsbehälter jeweils zumindest zwei eigene Dosierorgane und zumindest zwei eigene angetriebene, mit Wurfschaufeln besetzte Schleuderscheiben zugeordnet sind, wobei das jeweilige Dosierorgan der ihr zugeordneten Schleuderscheibe das auszubringende Material in einstellbarer Weise zuleitet, wobei die verschiedenen Materialsorten von jeweils verschiedenen Schleuderscheiben verteilt werden, wobei die die verschiedenen Materialsorten verteilenden Schleuderscheiben in unterschiedlichen Höhen zueinander angeordnet sind. Um den Streuer hinsichtlich seiner Anpassungsfähigkeit an unterschiedlichen Einsatzbedingungen zu verbessern, ist vorgesehen, daß die in unterschiedlichen Höhen zueinander angeordneten Schleuderscheiben mit unterschiedlichen Drehzahlen antreibbar sind.

## Beschreibung

Die Erfindung betrifft einen Schleuderstreuer gemäß des Oberbegriffes des Patentanspruches 1.

Ein derartiger Schleuderstreuer ist in der EP 04 97 166 A1 beschrieben. Bei diesem Schleuderstreuer sind die die unterschiedlichen Materialien verteilenden Schleuderscheiben in unterschiedlichen Höhen angeordnet. Die in dem Vorratsbehälter enthaltenen Materialien werden über unabhängig voneinander einstellbaren Dosierorganen den Schleuderscheiben zugeführt, so daß die ausgebrachte Materialmenge den erforderlichen Nährstoffverhaltnissen teilflächenspezifisch angepaßt werden kann.

Der Erfindung liegt die Aufgabe zugrunde, den bekannten Streuer hinsichtlich seiner Anpassungsfähigkeit an unterschiedlichen Einsatzbedingungen weiter zu verbessern.

Diese Aufgabe wird erfindungsgemäß dadurch gelöst, daß die in unterschiedlichen Höhen zueinander angeordneten Schleuderscheiben mit unterschiedlichen Drehzahlen antreibbar sind. Infolge dieser Maßnahmen läßt sich die Düngerverteilung optimal anpassen. Hierbei ist es beispielsweise möglich, wenn mit dem Schleuderstreuer der Dünger von den vier Schleuderscheiben in quer zur Fahrtrichtung nebeneinander und teilweise sich überlappenden Streubahnen ausgestreut wird, eine gute Düngerverteilung zu erreichen. Sinnvollerweise wird man die die äußeren Streustreifen abstreuenden Schleuderscheiben mit einer größeren Drehzahl als den inneren Bereich abstreuenden Schleuderscheiben antreiben. Hierbei kann vorgesehen sein, daß die oberen Schleuderscheiben mit einer größeren Drehzahl als die unteren Schleuderscheiben angetrieben werden. Es ist jedoch auch möglich, daß die unteren Schleuderscheiben mit einer größeren Drehzahl als die oberen Schleuderscheiben angetrieben werden. Die Drehzahl der Schleuderscheiben sind über Drehzahlveränderungensmittel veränderbar, so daß eine einfache Einstellung der Drehzahlen auch in vorteilhafter Weise während des Ausbringvorganges vorgenommen werden kann.

Für einige Einsatzfälle kann es sinnvoll sein, daß die oberen Schleuderscheiben in Fahrtrichtung gesehen auf ihren einander zugekehrten Seiten von außen nach innen drehen, während die unteren Schleuderscheiben in Fahrtrichtung gesehen auf ihrer einander zugekehrten Seite von innen nach außen drehen.

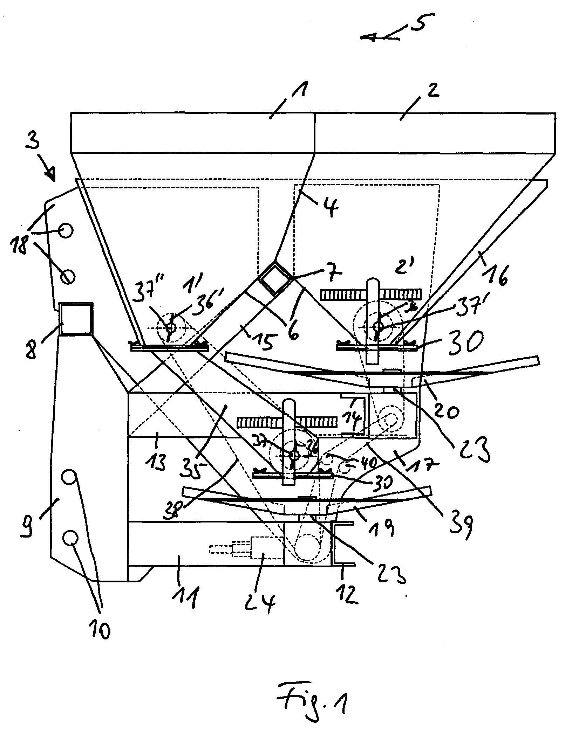

Weitere Einzelheiten der Erfindung sind den übrigen Unteransprüchen, der Bespielsbeschreibung und den Zeichnungen zu entnehmen. Hierbei zeigen
- Fig. 1: den Schleuderstreuer in der Seitenansicht und in Prinzipdarstellung und
- Fig. 2: den Schleuderstreuer in der Ansicht von hinten.

Der Schleuderdüngerstreuer weist die beiden hintereinander angeordneten Vorratsbehälter 1 und 2 sowie den Tragrahmen 3 auf. Die beiden Vorratsbehälter 1 und 2 sind durch die Trennwand 4 voneinander getrennt. Diese die beiden Vorratsbehälter 1 und 2 trennende Trennwand 4 kann herausnehmbar, verschwenkbar, absenkbar oder wegklappbar angeordnet sein.

Die beiden Vorratsbehälter 1 und 2 sind durch das sich quer zur Fahrtrichtung 5 erstreckende dachförmige Mittelteil 6 in ihrem unteren Bereich unterteilt. Der Tragrahmen 3 weist in seinem oberen Bereich den dem quer zur Fahrtrichtung 5 verlaufende dachförmigen Mittelteil 6 zugeordnete Querträger 7 auf. Der Querträger 7 ist mit den Vorratsbehältern 1 und 2 verbunden und bildet einen Teil der Wandung der Vorratsbehälter 1 und 2 und des dachförmigen Mittelteiles 6. Der Rahmen 3 weist den oberen quer zur Fahrtrichtung 5 verlaufenden vor dem Vorratsbehälter 1 angeordneten Querbalken 8 auf. Im Abstand zueinander sind an diesem Querbalken 8 die sich nach unten erstreckenden Unterlenkerstützen 9 angeordnet, an denen die Unterlenkeranschlüsse 10 angeordnet sind. Von diesen Unterlenkerstützen 9 aus erstrecken sich jeweils nach hinten Tragstreben 11, die auf der Rückseite mit einer unteren Quertraverse 12 verbunden sind. Im Abstand zu diesen unteren nach hinten ragenden Streben 11 sind oberhalb von diesen ebenfalls nach hinten ragenden Streben 13 angeordnet, an welchen wieder eine die Rückseite diese Streben 13 verbindende Quertraverse 14 angeordnet ist.

An den nach unten ragenden Unterlenkerstützen 9 des Tragrahmens 3 sind nach hinten und oben ansteigende Stützen 15 angesetzt, und an dem Querträger 7 angreifen.

Des weiteren sind die beiden Vorratsbehälter 1 und 2 durch das weitere, jedoch in Fahrtrichtung 5 laufende dachförmige Mittelteil 16 in ihrem unteren Bereich in die Auslauftrichter 1',1'',2',2'' aufgeteilt.

Unterhalb dieses in Fahrtrichtung 5 verlaufende dachförmige Mittelteil 16 ist ein aufrecht verlaufendes, als Hohlprofil ausgebildetes Stützelement 17angeordnet, welches mit dem Querträger 7 und dem Querbalken 8 des Tragrahmens 3 im Bereich des Oberlenkeranschlusses 18 verbunden ist. Des weiteren ist dieses Stützelement 17 mit dem in Fahrtrichtung 5 verlaufenden dachförmigen Mittelteil 16 in dessen oberen Bereich verbunden. Darüber hinaus ist dieses Stützelement 17 mit den beiden Quertraversen 12 und 14 verbunden. Der vordere Bereich des Stützelementes 17 bildet den Oberlenkeranschluß 18. Somit ist in den vorderen Teil des Stützelementes 17 der Oberlenkeranschluß 18 integriert.

Der Querbalken 8 ist unterhalb des Oberlenkeranschlusses 18 angeordnet und mit dem Stützelement 17 verbunden. Innerhalb des als Hohlprofil ausgebildeten Stützelementes 17 sind Antriebselemente für die Rührwelle und die Streueinrichtung angeordnet, wie weiter unten beschrieben ist, angeordnet.

Durch diese Ausbildung des Tragrahmens 3 mit dem Querträger 7 und dem Querbalken 8, den Stützen 15 und dem Stützelement 17 wird eine leicht bauende, tragfähige Rahmenkonstruktion für den Tragrahmen 3 geschaffen.

Die beiden Vorratsbehälter 1 und 2 sind wie vor erwähnt, durch das in Fahrtrichtung 5 sich erstreckende dachförmige Mittelteil 16 jeweils im unteren Bereich in die Auslauttrichter 1',1'',2',2'' aufgeteilt.

Jedem unteren Trichterende der Vorratsbehälter 1 und 2 ist eine Schleuderscheibe 19 bzw. 20 mit darauf angeordneten Wurfschaufeln 21,21',22,22' zugeordnet. Die Wurfschaufeln 21,21',22,22' können in Scheibenebene mit unterschiedlichen Winkeln zur Radialen eingestellt werden, um so durch die unterschiedliche Winkelanstellung der Wurfschaufeln 21,21',22,22' für unterschiedliche Materialsorten und Arbeitsbreiten eine gleichmäßige Düngerverteilung erzielen zu können.

Weiterhin kann vorgesehen sein, daß verschieden ausgebildete Wurfschaufel- oder Schleuderscheibensätze zur Anpassung an verschiedene Arbeitsbreiten- und Streubreitenbereiche zum Einsatz kommen.

Die Schleuderscheiben 19 und 20 sind dann auswechselbar auf ihren Antriebswellen 23 angeordnet. Die Schleuderscheiben 19 und 20 werden über die an dem Eingangsgetriebe 24 von der Schlepperzapfwelle und über Getriebezüge angetrieben. An der unteren Quertraverse 12 sind die beiden Winkelgetriebe 25 angeordnet. Auf den Wellen 23 der Winkelgetriebe 25 sind die Schleuderscheiben 19 auswechselbar angeordnet. An der oberen Quertraverse 14 sind die Winkelgetriebe 25' angeordnet, die die Schleuderscheiben 20 tragen. An den seitlichen Ausgangswellen 26 des Eingangsgetriebes 24 sind mit den Eingangswellen 27 der Winkelgetriebe verbundenen Wellen 28 angeordnet, die sich durch das Stützelement 17 hindurch erstrecken. Die Eingangswellen 27 der oberen Winkelgetriebe 25' sind durch die sich durch das Stützelement17 erstreckende Welle 29 untereinander verbunden.

Den Trichterenden sind jeweils Dosierorgane 30 zugeordnet. Den Trichterenden des hinteren Vorratsbehälters 2 sind als Bodenplatten 31 mit Auslauföffnungen, die über Schieber 32 in ihrer Öffnungsweite einzustellen und zu verschließen sind, ausgebildete Dosierorgane zugeordnet. Die Schieber 32 können mittels Einstellelementen verstellt werden. Die Öffnungsweite läßt sich über Anschlagelemente 33, die mit Skalen 34 zusammenwirken, festlegen. Es ist auch möglich, die Schieber 32 mittels elektrischer Einstellelemente elektronisch einzustellen.

Den vorderen Trichterenden ist jeweils ein das Material von den Trichterenden zu den Schleuderscheiben 19 leitendes Leitelement 35 zugeordnet. Dieses Leitelement 35 ist als Zuführschacht mit an dessen unteren Enden angeordnetem Dosierorgan 30 ausgebildet. Der Zuführschacht 35 erweitert sich stätig nach unten.

Dieses Dosierorgan 30 weist eine Bodenplatte 31 mit Auslauföffnung auf. Die Auslauföffnung ist über einen Schieber 32 in ihrer Öffnungsweite einstellbar und verschließbar. Die Schieber können mittels Einstellelementen verstellt werden. Die Öffnungsweite läßt sich über Anschlagelemente 33, die mit Skalen 34 zusammenwirken, einstellen. Es ist auch möglich, die Schieber 32 mittels elektronischer Einstellelemente elektrisch einzustellen.

Die Skalen 34 und Anschlagelemente 33 können seitlich der Maschine oder auf deren Rückseite angeordnet sein. Oberhalb jeder Bodenplatte 31 ist jeweils ein Rührorgan 36 auf einer Rührwelle 37 und 37', die sich durch das Stützelement hindurch erstreckt, angeordnet. Auch dem vorderen Trichterende ist eine sich ducrh das Stützelement erstreckende Rührwelle 37'' mit Rührelementen 36' zugeordnet.

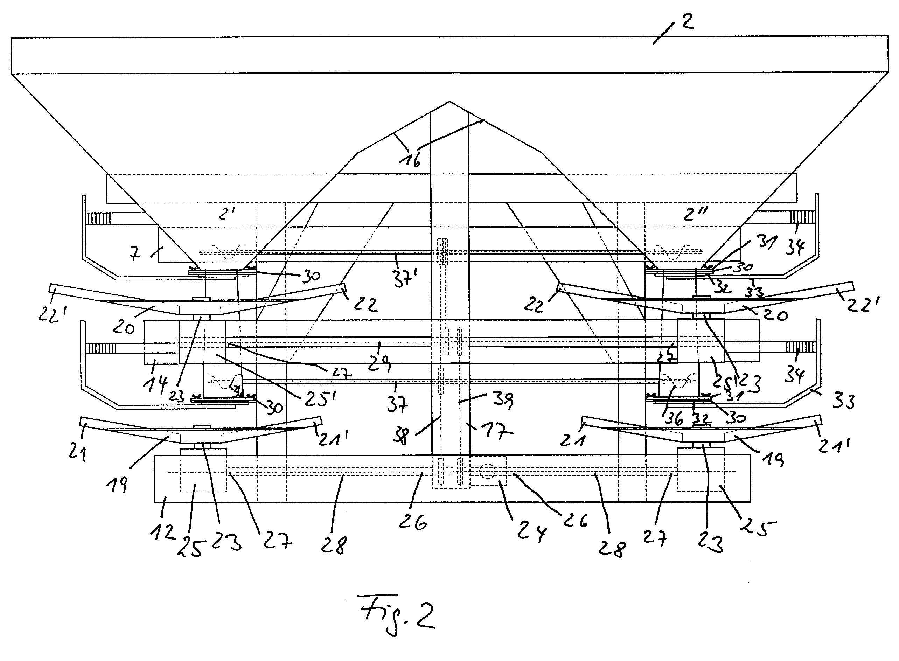

Die unteren Schleuderscheiben 19 werden von dem Eingangsgetriebe 24 über die Wellen 28 und die Winkelgetriebe 25 angetrieben. Die den unteren Schleuderscheiben 19 zugeordneten Rührwellen 37,37' des vorderen Vorratsbehälter 1 und der in dem Materialzuleitungselement 35 angeordneten Rührwelle 37 mit Rührelementen 36 werden von der unteren Antriebswelle 28 für die unteren Schleuderscheiben 19 über eine endlose Antriebsverbindng 38 angetrieben. Diese Antriebsverbindung 38 ist in Seitenansicht gesehen, wie in Fig. 2 dargestellt, zunächst nach oben und dann nach vorn geführt.

Zwischen der unteren quer zur Fahrtrichtung 5 liegenden Antriebswelle 28 für die unteren Schleuderscheiben 19 und der oberen quer zur Fahrtrichtung 5 liegenden Antriebswelle 29 für die oberen Schleuderscheiben 20 ist eine endlose Antriebsverbindung 39 angeordnet. Diese Antriebsverbindung 39 erstreckt sich zunächst nach oben und dann schräg nach hinten. Hierbei wird die endlose Antriebsverbindung 39 über Umlenkräder 40 umgelenkt.

Der Antrieb für die Schleuderscheiben ist derart ausgelegt, daß die oberen Schleuderscheiben 20, die die äußeren Bereiche abstreuen, mit größeren Drehzahl als die unteren Schleuderscheiben 19, die den inneren Streubereich abstreuen, angetrieben werden. Dieses läßt sich beispielsweise durch eine entsprechend angeordnete Übersetzung in den 'Winkelgetrieben 25 und 25' oder in der Antriebsverbindung 39 verwirklichen. Auch ist es möglich, die Schleuderscheiben 19 und 20 anstelle über die mechanischen Antriebselemente über Hydraulikmotoren anzutreiben, die über entsprechende hydraulische Regeleinrichtungen in ihrer Drehzahl regelbar sind.

Andererseits wäre es auch denkbar, die unteren Schleuderscheiben 19 mit einer größeren Drehzahl als die oberen Schleuderscheiben 20 anzutreiben.

Auch ist es möglich, die Drehzahlen der Schleuderscheiben 19 und 20 über nicht dargestellte Drehzahlveränderungsmittel in der mechanischen Antriebsversion veränderbar sind.

Desweiteren ist es möglich, die Rührorgane üben einen Antrieb, der Drehzahlverändungsmittel aufweist, anzutreiben, so daß die Drehzahl der Rührorgane veränderbar ist. Auch kann in dem Antrieb der Rührorgane eine Abschalteinrichtung vorgesehen sein, so daß die Rührorgane stillsetzbar sind.

Desweiteren ist es möglich, durch entsprechende Antriebsmittel einen wahlweisen Antrieb der Schleuderscheiben 19 und 20 vorzusehen, so daß die oberen Schleuderscheiben 20 in Fahrtrichtung 5 gesehen auf ihren einander zugekehrten Seiten von außen nach innen drehen, während die unteren Schleuderscheiben 20 in Fahrtrichtung 5 gesehen auf ihren einander zugekehrten Seite von innen nach außen drehen. Auch ist es möglich, die Drehrichtung der oberen und unteren Schleuderscheiben 19 und 20 über entsprechende Antriebsmittel umzuschalten.

## Patentansprüche

1. Schleuderstreuer mit zumindest zwei Vorratsbehältern für die getrennte Mitführung von zumindest zwei verschiedenen Düngersorten, wobei jedem Vorratsbehälter jeweils zumindest zwei eigene Dosierorgane und zumindest zwei eigene angetriebene, mit Wurfschaufeln besetzte Schleuderscheiben zugeordnet sind, wobei das jeweilige Dosierorgan der ihr zugeordneten Schleuderscheibe das auszubringende Material in einstellbarer Weise zuleitet` wobei die verschiedenen Materialsorten von jeweils verschiedenen Schleuderscheiben verteilt werden, wobei die die verschiedenen Materialsorten verteilenden Schleuderscheiben in unterschiedlichen Höhen zueinander angeordnet sind, dadurch gekennzeichnet, daß die in unterschiedlichen Höhen zueinander angeordneten Schleuderscheiben (19, 20) mit unterschiedlichen Drehzahlen antreibbar sind.

2. Schleuderstreuer nach Anspruch 1, dadurch gekennzeichnet, daß die oberen Schleuderscheiben (20) mit einer größeren Drehzahl als die unteren Schleuderscheiben (19) angetrieben werden.

3. Schleuderstreuer nach Anspruch 1, dadurch gekennzeichnet, daß die unteren Schleuderscheiben (19) mit einer größeren Drehzahl als die oberen Schleuderscheiben (20) angetrieben werden.

4. Schleuderstreuer mit einem oder mehreren der vorstehenden Ansprüche, dadurch gekennzeichnet, daß die Drehzahlen der Schleuderscheiben (19, 20) über Drehzahlveränderungsmittel veränderbar sind.

5. Schleuderstreuer nach einem oder mehreren der vorstehenden Ansprüche, dadurch gekennzeichnet, daß den Dosierorganen (30) Rührorgane (36 ) zugeordnet sind, daß die Drehzahl der Rührorgane (36) über Drehzahlveränderungsmittel veränderbar sind.

6. Schleuderstreuer nach einem oder mehreren der vorstehenden Ansprüche, dadurch gekennzeichnet, daß die Rührorgane ( 36 ) stillsetzbar sind.

7. Schleuderstreuer nach einem oder mehreren der vorstehenden Ansprüche, dadurch gekennzeichnet, daß die oberen Schleuderscheiben (20) in Fahrtrichtung (5) gesehen auf ihren einander zugekehrten Seiten von außen nach innen drehen.

8. Schleuderstreuer nach einem oder mehreren der vorstehenden Ansprüche, dadurch gekennzeichnet, daß die unteren Schleuderscheiben (19) in Fahrtrichtung (5) gesehen auf ihrer einander zugekehrten Seite von innen nach außen drehen.
